# EUROPÄISCHE PATENTANMELDUNG

(11) **EP 0 786 326 A1**
(43) Veröffentlichungstag der Anmeldung: **30.07.1997**
(21) Anmeldenummer: 97100792.7
(22) Anmeldetag: 20.01.1997
(51) Int. Cl.: B29D 11/00, B29C 59/02

(54) **Verfahren und Vorrichtung zur Herstellung von optischen Linsen und optischen Linsenarrays**

(30) Priorität: 26.01.1996 DE 19602736
(71) Anmelder: INSTITUT FÜR MIKROTECHNIK MAINZ GmbH, 55129 Mainz-Hechtsheim (DE)
(72) Erfinder: Ehrfeld, Wolfgang, Prof. Dr., 55124 Mainz (DE); Picard, Antoni, Dr., 55270 Essenheim (DE); Löwe, Holger, Dr., 55276 Oppenheim (DE); Michel, Andreas, Dr., 76571 Gaggenau (DE)
(74) Vertreter: COHAUSZ HASE DAWIDOWICZ & PARTNER

(57) **Zusammenfassung**

Die Erfindung betrifft eine Vorrichtung und ein Verfahren zur Herstellung von Linsen, mit einer Matrize (1), die eine oder mehrere Öffnungen und/oder Ausnehmungen (2) für die zu formende Linse aufweist, wobei die relative Lage der Öffnungen oder Ausnehmungen (2) den zu formenden Linsen entsprechen, und mit einer Anpreßeinrichtung (4), mittels derer ein Formstoff (3) in einer Preßrichtung in die Öffnungen oder Ausnehmungen (2) der Matrize (1) einpreßbar ist, bei der die Matrize (1) die zu formende Mikrolinse nur in einem Randbereich im wesentlichen außerhalb der optischen Oberfläche berührt.

## Beschreibung

Die Erfindung betrifft eine Vorrichtung und ein Verfahren zur Herstellung von optischen Linsen und optischen Linsenarrays mit den Merkmalen des Oberbegriffs des Anspruchs 1, des Anspruchs 2 sowie des Anspruchs 13.

Aus der DE 2510043 A1 ist ein Verfahren zur Herstellung von Mikrozylinderlinsen bekannt, bei dem einzelne Glasfasern mit kreisförmigem Querschnitt in Längsrichtung eben anpoliert werden oder ihrer Länge nach entlang ihrer Achse in zwei gleiche Stränge aufgespalten werden. Die so erhaltenen, halbrunden Glasfaserstränge bilden die Mikrozylinderlinsen.

Aus der EP 0494924 B1 ist eine Vorrichtung zur Herstellung kleiner Linsen bekannt, die die Linsen aus einem flüssigen Monomer erzeugen kann. Dazu wird ein Monomertropfen an der Atmosphäre gebildet, dessen freie, in der Regel sphärische Oberfläche die Oberfläche der Linse bildet und der im Anschluß ausgehärtet wird. Außerdem ist aus der EP 0011331 B1 ein Verfahren zur Herstellung eines Matrizenwerkzeugs für Linsen oder Spiegel bekannt, bei dem mit einem Schneid- oder Schleifwerkzeug eine harte, siliciumhaltige Werkstoffoberfläche mit einem bestimmten Profil versehen wird, diese Oberfläche dann mit einer nickelähnlichen Schicht überzogen wird und das so erhaltene Formwerkzeug zur Herstellung von Linsenarrays Verwendung findet.

Schließlich ist aus der Zeitschrift 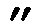 Optical Engineering", November 1994, Vol. 33, Nr. 11, S. 3556 - 3566, ein Verfahren zur Herstellung von mikrooptischen Elementen bekannt. Bei diesem Verfahren werden relativ flache optische Gebilde (Fresnel-Linsen, etc.) durch Laserbelichtung einer Fotoresiststruktur mit nachfolgendem Entwickeln und Galvanoformen hergestellt.

Die bekannten Verfahren sind für eine Massenfertigung von Mikrolinsen oder Mikrolinsenarrays zu aufwendig oder ergeben keine Mikrolinsen von der anzustrebenden Qualität. Außerdem haben die bekannten Verfahren den Nachteil, daß Halterungen für die Linsen inklusive Justagestrukturen für die Linsen mit einer Genauigkeit im µm-Bereich in weiteren, sehr aufwendigen Verfahrensschritten hergestellt werden können.

Es ist daher Aufgabe der Erfindung, eine Vorrichtung und ein Verfahren zur Herstellung von optischen Linsen bzw. Mikrolinsen anzugeben, die für die Herstellung großer Stückzahlen in guter Qualität ausreichend sind. Außerdem soll ein Verfahren angegeben werden, durch welches Halterungen für die Linsen inklusive Justagestrukturen mit einer Genauigkeit im µm-Bereich hergestellt werden müssen.

Diese Aufgabe wird von einer Vorrichtung mit den Merkmalen des Anspruchs 1, von einer Vorrichtung mit den Merkmalen des Anspruchs 2, sowie von einem Verfahren mit den Merkmalen des Anspruchs 13 gelöst.

Weil die Matrize die zu formende optische Linse im wesentlichen nur außerhalb der optischen Oberfläche berührt, ist die zu formende optische Linse von der Oberflächenform her nur durch die dynamischen Formungsvorgänge (im wesentlichen sind dies: Preßdruck und/oder Temperatur der Formmasse in Abhängigkeit von der Viskosität des Formmassenmaterials und die spezielle Ausgestaltung der Matrize) abhängig und insofern durch Variation dieser Parameter einstellbar. Außerdem ist die Oberflächenqualität der Matrize nicht bestimmend für die Oberflächenqualität der erzeugten Linse.

Weil gemäß Anspruch 2 eine Einrichtung vorgesehen ist, mittels derer ein Fluid unter Druck durch die Öffnungen oder Ausnehmungen der Matrize gegen einen Formstoff preßbar ist, können optische Strukturen ohne Berührung mit der Matrize in den Formstoff eingeprägt werden, so daß beispielsweise Konkavlinsen gebildet werden.

Der Aufwand zur Herstellung der Matrize ist wesentlich geringer als bei konventionellen Formeinsätzen für optische Linsen, die durch Heißpressen hergestellt werden. Bei diesem konventionellen Herstellungsverfahren durch Heißpressen wird die Oberflächenqualität der heißgepreßten Linsen durch die Oberflächenqualität des Formeinsatzes bestimmt.

Das Verfahren ist damit auch geeignet für optische Materialien, die bei der Verarbeitungstemperatur reaktiv sind und daher berührungslos geformt werden müssen (z. B. einige Glassorten).

Außerdem hat das erfindungsgemäße Verfahren den Vorteil, daß eine Halterung für die Linse mit der Linse gleichzeitig hergestellt werden kann. Die Halterung kann weitere Justagestrukturen enthalten, wodurch die Linse zu anderen optischen Komponenten, wie z. B. Fasersteckern oder Diodenlasern mit einer Präzision im µm-Bereich ausgerichtet werden kann.

Bei dem hier beschriebenen Verfahren ist es vorteilhaft, wenn die Öffnungen oder Ausnehmungen in der Preßrichtung tiefer sind als die Dicke der zu formenden Mikrolinse. Es kann sich deshalb beispielsweise sowohl um Durchgangsbohrungen als auch beispielsweise um Sacklochbohrungen handeln, deren Tiefe die Dicke der Mikrolinse beträchtlich überschreitet. Dabei können die Ausnehmungen in der Matrize beliebig angeordnet werden. Diese Ausgestaltung führt zu einer erhöhten Stabilität der Matrize. Es kann aber auch eine relativ dünne Matrize verwendet werden, beispielsweise in Gestalt einer mit Löchern versehenen Platte, sofern diese Platte eine ausreichende Festigkeit aufweist oder zwischen den Öffnungen unterstützt wird.

Wenn der Matrize oder der Anpreßeinrichtung oder beiden eine Heizeinrichtung zugeordnet ist, besteht bei der Auswahl des verwendeten Formstoffs eine größere Flexibilität hinsichtlich des zur Verformung nötigen Temperaturbereichs. Es ist außerdem vorteilhaft, wenn die Matrize eine Vielzahl von Öffnungen oder Ausnehmungen aufweist, die in einem festgelegten Raster angeordnet sind, weil dann eine große Anzahl von Linsen in einem Formungsschritt erzeugt werden kann oder direkt ein Array von Mikrolinsen gefertigt werden kann, das beispielsweise für die optische Verarbeitung des aus einem Glasfaserbündel austretenden Lichts geeignet ist.

Eine hohe Genauigkeit bei der zu verwendenden Matrize ergibt sich, wenn die Matrize mit einem mikrotechnischen Verfahren hergestellt wird. Dazu sind besonders Röntgenlithographie, UV-Lithographie oder Ätzverfahren geeignet. Es kann aber auch vorteilhaft sein, wenn die Matrize mittels konventionellen feintechnischen Verfahren, wie beispielsweise Bohren, Fräsen oder Erodieren hergestellt ist, wenn dieses Verfahren einfacher und von der Genauigkeit her ausreichend ist.

Linsen mit einem optischen Verhalten, wie es beispielsweise von konventionellen sphärischen Linsen bekannt ist, ergeben sich, wenn Öffnungen oder Ausnehmungen im wesentlichen einen runden Querschnitt aufweisen.

Es lassen sich auch Öffnungen und Ausnehmungen verwenden, die einen nicht kreisförmigen Querschnitt aufweisen. So lassen sich beispielsweise mit ellipsenförmigen Ausnehmungen nicht rotationssymmetrische optische Linsen herstellen, deren optische Eigenschaften beispielsweise astigmatisch sind. Mit diesen so ausgestalteten optischen Linsen kann beispielsweise der Astigmatismus einer konventionellen Laserdiode korrigiert werden. Dabei kann mit der so hergestellten astigmatischen Linse auf diese Weise ein radialsymmetrisches Lichtbündel erzeugt werden, das sich sehr vorteilhaft zur Einkopplung in weitere optische Komponenten eignet.

Es kann aber auch beabsichtigt sein, daß Öffnungen oder Ausnehmungen einem im wesentlichen rechteckigen Querschnitt aufweisen. Schließlich können die Öffnungen auch graben- oder schlitzartige Strukturen sein, die dann zur Bildung von Zylinderlinsen Verwendung finden.

Durch eine beliebige Ausformung der Ausnehmungen bzw. Öffnungen in der Matrize lassen sich optische Linsen erzeugen, die völlig unterschiedliche optische Eigenschaften aufweisen und auf ein bestimmtes zu lösendes Problem zugeschnitten werden können.

Es kann jedoch auch vorgesehen sein, daß die Matrize nach der Formung der Mikrolinse auf dem Formstoff verbleibt, so daß die Matrize eine Halterung für die gebildeten Mikrolinsen darstellen kann. Diese Halterung kann beispielsweise mit einem mikrotechnischen Verfahren hergestellt sein und weitere Justagestrukturen erhalten, die eine hochpräzise Ausrichtung zu anderen optischen Komponenten erlaubt. Außerdem entfällt in diesem Fall der Entformprozeß, wodurch die Linsenqualität erhöht werden kann. Es ist besonders vorteilhaft, wenn die Matrize einen Hinterschnitt aufweist, so daß sich ein Formschluß zwischen Linse und Halterung ergibt.

Insbesondere kann die auf dem Formstoff verbliebene Matrize die Umgebung der geformten Mikrolinsen so abdecken, daß in diesen zwischen den Linsen befindlichen Bereichen kein Licht ein- bzw. austreten kann. Diese Ausgestaltung der Erfindung ist insbesondere dann vorteilhaft, wenn über die verschiedenen Linsen optische Datensignale abgestrahlt werden sollen und ein Übersprechen der verschiedenen gebildeten Kanäle möglichst klein gehalten werden soll. Diese Ausgestaltung ist außerdem vorteilhaft, wenn die Mikrolinsenarrays für optische Abbildungen benutzt werden.

Wenn ein im wesentlichen flüssiger Formstoff verwendet werden soll, ist es vorteilhaft, wenn zwischen Formstoff und Matrize eine Folie eingebracht wird. Dies kann dadurch erfolgen, daß die Folie auf die Matrize aufgelegt oder aufgesprüht wird. Im Anschluß wird der flüssige Formstoff auf die Folie aufgetragen. Vorteilhaft ist dabei daß der flüssige Formstoff nicht in unerwünschter Weise in die Öffnungen oder Ausnehmungen der Matrize eindringen kann. Die Beaufschlagung eines Drucks erfolgt entweder durch Anpressen der Matrize auf den Formstoff oder mittels eines Druckübertragungsmediums durch die Matrizenöffnungen. Nach der Verfestigung des Formstoff können Folie und Formstoff getrennt werden. Falls die Folie von ausreichender Qualität ist, ist es aber auch möglich, daß Folie und Formstoff miteinander verbunden bleiben.

Die Verwendung einer Folie hat den weiteren großen Vorteil, daß durch Auswahl einer Folie mit geeigneten Eigenschaften die Form der Linsen gezielt beeinflußt werden kann. Durch diese Maßnahmen können beispielsweise Linsen und Linsenarrays mit speziellen Oberflächenprofilen hergestellt werden.

Bei dem erfindungsgemäßen Verfahren werden Mikrolinsen oder Mikrolinsenarrays hergestellt, indem zunächst eine im Bereich einer Oberfläche mit Öffnungen oder Ausnehmungen versehene Matrize mit einem Formstoff beaufschlagt wird, sodann entweder ein Teil des Formstoffs in die Öffnungen der Matrize derart gepreßt wird, daß der Formstoff den Grund der Öffnungen oder Ausnehmungen im wesentlichen nicht berührt, oder ein Fluid durch die Öffnungen oder Ausnehmungen der Matrize gegen den Formstoff gepreßt wird, und schließlich der Formstoff verfestigt wird.

Auf diese Weise können Linsen hergestellt werden, deren Oberflächeneigenschaften nicht von der Oberflächenstruktur der verwendeten Matrize abhängen. Die Geometrie der Linse kann im wesentlichen über den Preßdruck, die Temperatur der Formmasse, die Zeit des Preßprozesses und die Viskosität des Formstoffs, die Anordnung der Öffnungen und Ausnehmungen auf der Matrize sowie über die Geometrie der Randbereiche der Öffnungen oder Ausnehmungen gesteuert werden.

Die Mikrolinsen selbst werden aus einem für Infrarot und/oder Ultraviolett und/oder sichtbare Strahlung durchlässigen Material geformt. Der Formstoff kann dabei ein hochviskoser Formstoff sein, der nach dem Formungsprozeß aushärtet. Denkbar sind hier beispielsweise Reaktionsgießharze. Möglicherweise kann der Formprozeß auch so gesteuert werden, daß der Formstoff durch die Beaufschlagung mit Druck überhaupt plastisch verformbar wird.

Vorteilhaft ist das Verfahren auch ausführbar, wenn der Formstoff ein thermoplastischer Kunststoff ist. Dabei kann sich der Formstoff während des Formungsprozesses im Bereich seiner Erweichungstemperatur befinden und die Verfestigung dadurch erreicht werden, daß der Formstoff unter seine Erweichungstemperatur abgekühlt wird. Als Formstoff kommen auch Gläser, beispielsweise Silikatgläser und Silberhalogenide, in Frage. Auch können transparente Materialien verwendet werden, die mit Hilfe eines Sol-Gel-Prozesses hergestellt werden (wie beispielsweise ORMOCERE).

Über ein Temperaturprogramm sind die Formungs- und Verfestigungsschritte in an sich bekannter Weise zu steuern.

Der Formstoff kann sich während des Formungsprozesses auch unterhalb einer Erweichungstemperatur befinden, wenn die Formung dadurch erreicht werden kann, daß der Formstoff unter erhöhtem Druck plastisch verformbar wird. Bekannte Formstoffe können Harze, keramische Formmassen, Glas, beispielsweise Silikatgläser oder Silberhalogenide sein. Dabei kann die Verfestigung aufgrund chemischer Reaktionen und/oder physikalischer Prozesse erfolgen, insbesondere auf Polymerisation oder Vernetzung von Polymerketten.

In einer weiteren Ausführungsform des beschriebenen Verfahrens kann die Mikrolinse oder das Mikrolinsenarray nach der ursprünglichen Formung gemäß dem insoweit beschriebenen Verfahren durch galvanische Abscheidung von Metall abgeformt werden. Das abgeformte Metall kann dann als Matrize oder Form für die Herstellung von Linsen verwendbar sein. Das abgeformte Metall dient dann als Form, in die ein Formstoff eingegossen oder eingepreßt wird. Auf diese Weise erhält man konvexe Linsen. Diese Ausführungsform hat den weiteren Vorteil, daß für die ursprüngliche Formung der Mikrolinsen auch nichttransparente Materialien verwendet werden können.

Bei der Verwendung dieser metallischen Formen wird in einer Weise, die aus dem Stand der Technik bekannt ist, der Formstoff auf die Oberfläche der neugewonnenen Form gepreßt. Hierbei ist dann für die Qualität der Linsen die Qualität der ursprünglichen und abgeformten Linsenoberfläche entscheidend. Wenn die Urform nach dem erfindungsgemäßen Verfahren oder mittels der erfindungsgemäßen Vorrichtung gewonnen wurde, ist auch bei den in dieser Weise mittels der metallischen Form abgeformten Mikrolinsen die Oberfläche des frei verformten Formstoffs eine gute Grundlage.

Wird die oben beschriebene, durch zweifache galvanische Abscheidung erzeugte, positive metallische Matrize zur Abformung von Linsen mittels einer Formmasse verwendet, so lassen sich konkav geformte, optische Linsen herstellen. Auch diese Linsen weisen eine sehr gute Oberflächenqualität auf, da die Oberfläche durch die direkte Abformung der Oberfläche der ursprünglichen Mikrolinse geformt wird.

Im folgenden wird die Erfindung anhand von Ausführungsbeispielen veranschaulicht, die sich auf Linsen mit geringen Abmessungen beziehen. Die erfindungsgemäßen Vorrichtungen und Verfahren sind aber ohne weiteres auch auf größere Linsen anwendbar.

Es zeigen:
- Figur 1:: In einer symbolischen Darstellung ist die Erzeugung eines Formteils mit Mikrolinsen gezeigt;
- Figur 2:: die Abformung der ursprünglichen Mikrolinsen gemäß Figur 1 zur Herstellung eines Preßwerkzeugs;
- Figur 3:: verschiedene Varianten zur Erzeugung eines Formteils nach dem erfindungsgemäßen Verfahren;
- Figur 4:: ein in einen Halter eingesetztes Mikrolinsenarray für einen Mehrfachsteckverbinder für Glasfaserbündel in nicht zusammengestecktem Zustand in einer symbolischen Darstellung in einer Draufsicht;
- Figur 5:: ein in einen Halter eingesetztes Mikrolinsenarray für einen Mehrfachsteckverbinder für Glasfaserbündel in zusammengestecktem Zustand in einer Draufsicht;
- Figur 6:: ein in einen Halter eingesetztes Mikrolinsenarray gemäß Figur 11 in einer anderen Ausführungsform in einer perspektivischen Darstellung;
- Figur 7:: ein in einen Halter eingesetztes Mikrolinsenarray, wobei der Halter sowohl der Positionierung der Linsen dient als auch als optische Blende in einer perspektivischen Darstellung;
- Figur 8:: eine Variante zur Erzeugung von Formteilen mit zwischen der Matrize und dem Formstoff angeordneter Trennfolie; sowie
- Figur 9:: eine Verfahrensvariante, bei der ein Druckübertragungsmedium ohne Trennfolie verwendet wird.

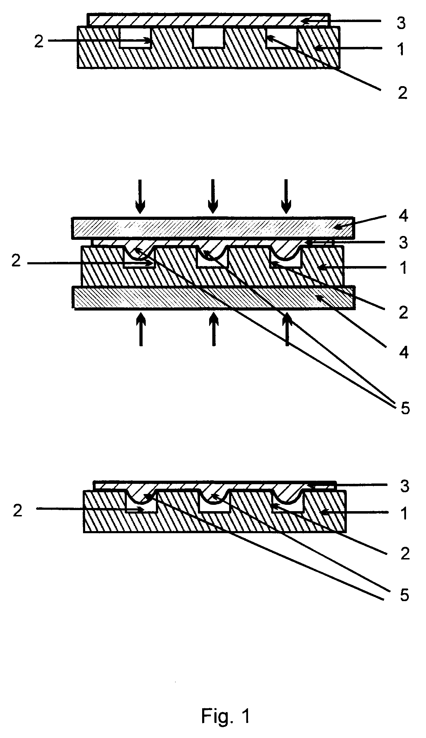

In der Figur 1 ist in einer symbolischen Darstellung die Erzeugung eines Formteils mit drei Mikrolinsen veranschaulicht. Eine Matrize 1 ist mit drei senkrechten Ausnehmungen 2 versehen, die beispielsweise kreisrunde Sackbohrungen sein können. Die Ausnehmungen 2 können durch Anwendung von Mikrotechnik auch bei kleinen Abmessungen mit sehr genauer Kontur und scharf begrenzten Kanten erzeugt werden. Hier bietet sich insbesondere die Röntgenlithographie oder UV-Lithographie an. Diese Techniken sind allgemein bekannt, beispielsweise unter dem Stichwort LIGA-Technik.

Ein Formstoff 3, der die gewünschten optischen Eigenschaften besitzt, wird einseitig auf die Matrize 1 aufgebracht, so daß sich der Formstoff 3 im Bereich der Ausnehmungen 2 befindet. Sodann wird eine Anpreßvorrichtung 4 auf den Formstoff 3 abgesenkt und mit einer durch einen senkrechten Pfeil veranschaulichten Kraft beaufschlagt. Die Parameter Druck, Temperatur und Zeit werden in Abhängigkeit von den Eigenschaften des Formstoffs 3 so gewählt, daß der Formstoff im gewünschten Ausmaß plastisch verformt wird und sich kuppelförmig in die Ausnehmungen 2 hinein wölbt. Dabei bilden sich Ausbuchtungen 5, die von der Geometrie her ballig sind und je nach Gestaltung der Ausnehmungen 2 die gewünschten optischen Eigenschaften von Linsen besitzen. Nach dem Formungsprozeß ist aus dem Formstoff 3 mit den Ausbuchtungen 5 ein Array von Mikrolinsen 6 geformt worden, das nun als Mikrolinsenarray in einem optischen Bauelement Verwendung finden kann. Beispielsweise können die Mikrolinsen dazu verwendet werden, den Astigmatismus und das elliptische Abstrahlprofil einer konventionellen Laserdiode zu korrigieren und dabei einen kollimierten, radialsymmetrischen Strahl zu erzeugen.

Das Mikrolinsenarray 6 kann aber auch als Urform für die weitere Formung von Mikrolinsenarrays mit weniger aufwendigen Verfahren benutzt werden.

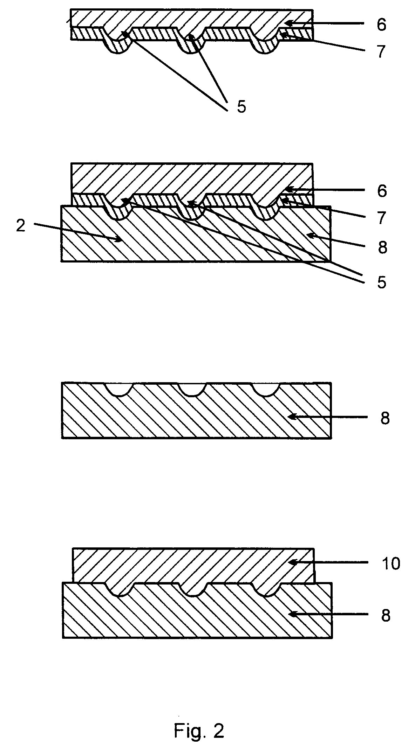

Ein Beispiel für das hier anzuwendende Verfahren ist in der Figur 2 veranschaulicht. Das Mikrolinsenarray 6 wird an seiner mit den Ausbuchtungen 5 versehenen Oberfläche mit einer metallischen Schicht 7 versehen. Auf die metallische Schicht 7, die als Startschicht für einen an sich bekannten Galvanoformungsprozeß dient, wird eine Metallschicht 8 aufgetragen. Die Metallschicht 8 erhält durch Wachstum im galvanischen Bad eine Dicke, die es erlaubt, die Metallschicht 8 von dem Linsenarray 6 abzutrennen und so handhaben zu können, daß die Form erhalten bleibt.

Das Linsenarray 6 wird sodann von der Metallschicht 8 entfernt, die Oberfläche der Metallschicht 8 wird weiter bearbeitet und ist sodann als Formeinsatz für die Kunststoffabformung zu verwenden. Dazu wird auf die Metallschicht 8 ein für die vorgesehenen Zwecke geeignetes Material, also beispielsweise ein im optischen Bereich transparenter Kunststoff, aufgebracht und mit der Metallschicht 8 so in Kontakt gebracht, daß die Negativformen der Ausbuchtungen 5 des Linsenarrays 6 wiederum abgeformt werden. Auf diese Weise wird durch einen Kunststoffabformungsprozeß das Mikrolinsenarray 6 in einem relativ einfach zu steuernden Fertigungsschritt repliziert und bildet ein Bauelement 10. Dieses Bauelement kann so verwendet werden, wie es oben für das Mikrolinsenarray 6 beschrieben worden ist.

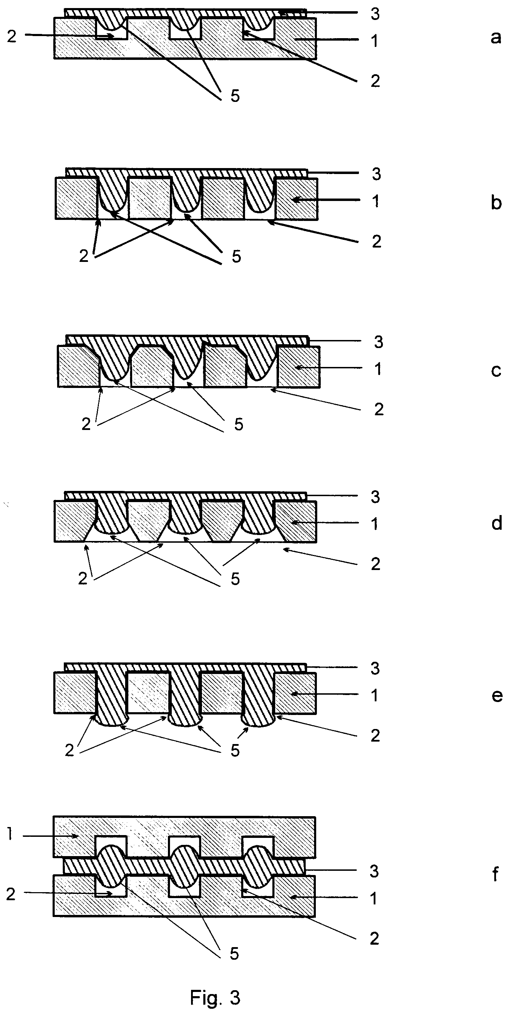

In der Figur 3 sind verschiedene Konfigurationen dargestellt, mit denen unterschiedliche Linsen hergestellt werden können. Es ergeben sich je nach Form der Matrize die in den Figuren 3a bis 3e dargestellten Linsenformen, die beispielsweise asphärisch oder asymmetrisch sein können. In der Ausführung gem. Figur 3f ist auch das (obenliegende) Anpreßwerkzeug mit einer Matrizenstruktur versehen, die symmetrisch zu der unteren Matrize ist. Hiermit ist es möglich, auf beiden Seiten des Formstoffs Linsen auszubilden, die wahlweise dieselbe oder unterschiedliche Geometrie aufweisen können. Auch die optischen Achsen der sich gegenüberliegenden Linsen können je nach Anwendungsfall entweder miteinander fluchten oder gegeneinander versetzt sein.

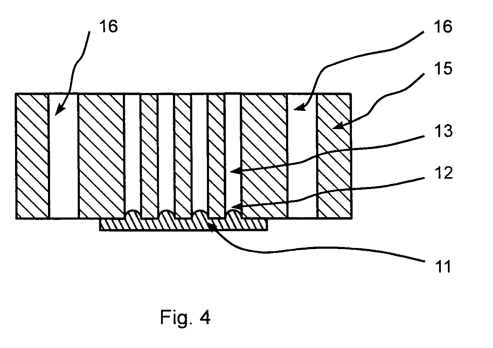

Die Figur 4 zeigt in einer Draufsicht im Querschnitt den Einsatz eines Linsenarrays 11 in einem Steckverbinder für Glasfaserbündel mit vier Kanälen. Dabei weist das Mikrolinsenarray 11 vier angeformte Linsen 12 auf, die in Kanäle 13 des Steckverbindergrundkörpers 15 eingesetzt sind. Der Grundkörper 15 des Steckverbinders trägt außerdem an seiner Außenseite zwei Durchgangsöffnungen 16 größeren Durchmessers, die zur Aufnahme von Positionierungsstiften vorgesehen sind.

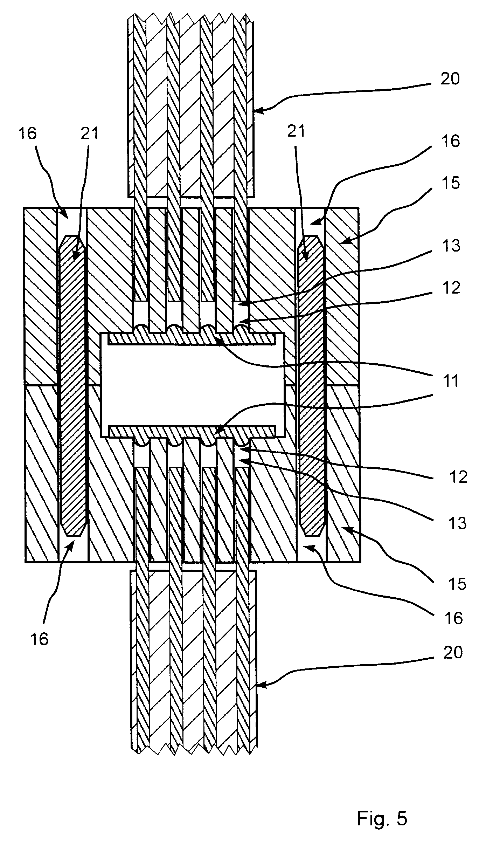

Die Figur 5 zeigt die Kopplung zweier Glasfaserbündel 20 mittels des in Figur 4 veranschaulichten Steckverbinders. Die einzelnen Fasern der Glasfaserbündel verlaufen durch die Kanäle 13 zu dem Mikrolinsenarray 11 hin und sind optisch an die einzelnen Linsen 12 angekoppelt. Die Linsen 12 wiederum strahlen das von den Glasfaserbündeln 20 kommende Licht in die freien Kanäle, die sich zwischen den Linsenarrays 11 erstrecken, ab. Das auf einer Seite durch die Mikrolinse 12 zerstreute oder gebündelte Licht aus einem Glasfaserstrang wird dann auf der zweiten Seite des Steckverbinders in der gegengleichen Linse 12 des Linsenarrays 11 wieder gebündelt und in die entsprechende Glasfaser eingekoppelt. Es handelt sich also um einen optischen Kontakt, der über einen gewissen Freiraum hin zu einer zweiten Glasfaser hergestellt wird. Diese Kontaktierungstechnik hat hinsichtlich der erforderlichen Präzision und der Sauberkeit der Verbindung zu den bisher bekannten Steckverbindern optischer Fasern erhebliche Vorteile.

So waren bislang bei physischem Kontakt der Glasfasern zueinander die Grenzflächen der Glasfasern so zu behandeln, daß keine oder nur eine geringe Dämpfung des optischen Signals durch Defekte oder Verschmutzung an den Grenzflächen eintrat. Die Bündelung oder Zerstreuung des die Daten übermittelnden Lichts an den Linsenarrays 11 ermöglicht nun eine Ankoppelung von Glasfasersträngen aneinander, ohne einen physikalischen Kontakt herstellen zu müssen. Außerdem werden durch die Aufweitung des optischen Strahles die Anforderungen an die laterale Ausrichtung der beiden Steckerhälften zueinander wesentlich reduziert. Die korrekte Ausrichtung der optischen Achsen der Linsenarrays 11 und insbesondere der Linsen 12 zueinander erfolgt durch Positionierstifte 21, die in die Kanäle 16 eingesetzt werden.

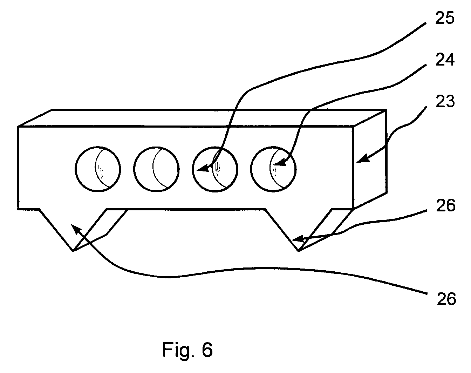

Die Figur 6 zeigt eine Linsenhalterung 23 für vier Mikrolinsen 24. Die Linsenhalterung kann identisch mit der für die Formung der Mikrolinsen 24 verwendeten Matrize sein, wenn nämlich nach dem Formungsvorgang die Matrize nicht von dem Formstoff 3, aus dem die Mikrolinsen 24 geformt worden sind, getrennt wurde. Eine entsprechend ausgestaltete Matrize kann dann als Linsenhalterung 23 weiter verwendet werden. Es sind bei dem Ausführungsbeispiel gemäß Figur 6 in der Linsenhalterung 23 Kanäle 25 als Öffnungen für die Linsen 24 vorgesehen. Außerdem weist die Linsenhalterung 23 an ihrer Unterseite in Figur 5 Justagestrukturen 26 auf, die im dargestellten Beispiel pyramidenförmig sind und z. B. in anisotrop in Si-geätzte Strukturen eingesetzt werden. Als Anwendungsgebiet kommt die elektro-optische Hybridtechnik, insbesondere die Kopplung von Laser-/Detektorarrays an Faserbändchen in Betracht. Die Linsenhalterung 23 mit den Justagestrukturen 26 ist vorteilhaft in Mikrotechnik herstellbar.

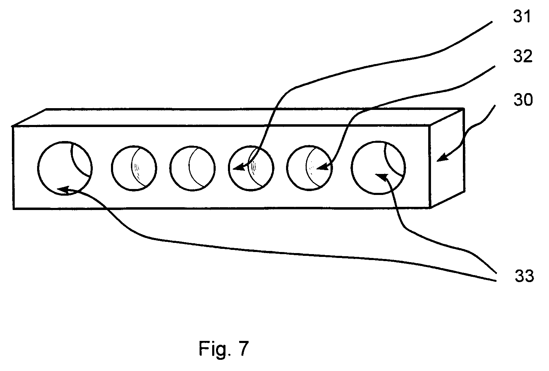

Die Figur 7 zeigt schließlich eine Linsenhalterung 30 mit Öffnungen 31 für Mikrolinsen 32, entsprechend Figur 5. Jedoch sind im dargestellten Ausführungsbeispiel Bohrungen größeren Durchmessers 33 vorgesehen, die achsparallel zu den Linsenöffnungen 31 angeordnet sind und zur Aufnahme von Positionierstiften dienen, die beispielsweise in der Figur 5 dargestellt sind. Die Positionierstifte dienen zur gegenseitigen Ausrichtung zweier gegengleicher Linsenhalter 30, derart, daß die Linsenöffnungen 31 und damit die optischen Achsen der Linsen 32 koaxial und achsparallel zueinander ausgerichtet werden, und auf diese Weise werden Abstrahl- und Einstrahlungsverluste, die sich in einer Dämpfung des optischen Signals ausdrücken würden, minimiert.

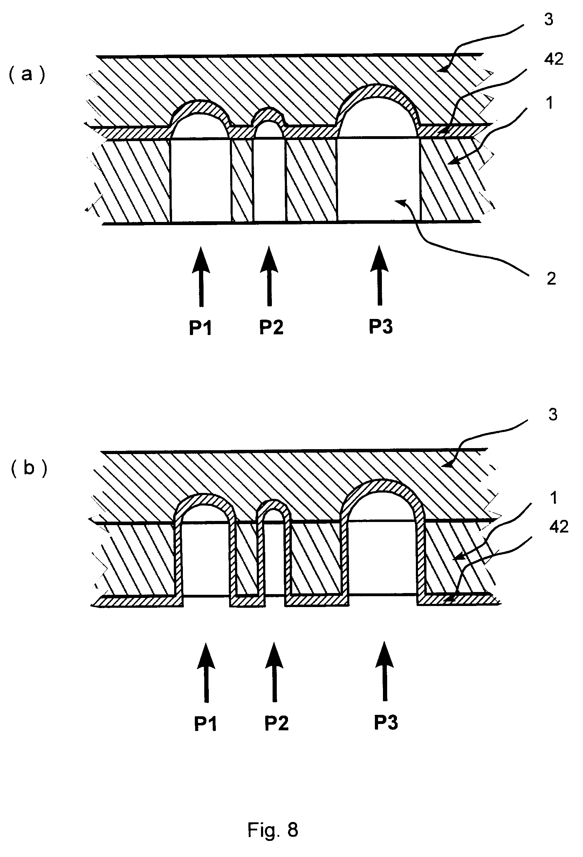

In Fig. 8a wird die Folie 42 zwischen Matrize 1 und Formstoff 3 eingebracht und von der Rückseite der Matrize über die Öffnungen 2 ein Druckübertragungsmedium (z.B. Luft, Öl) zugeführt. Dabei kann es vorgesehen sein, daß an verschiedene Öffnungen in der Matrize jeweils einen anderer Druck (P1, P2, P3) anzulegen. Der durch die Matrizenoffnungen auf den Formstoff wirkende Druck führt dazu, daß bei geeigneter Prozeßführung im Formstoff ein Linsenarray gebildet wird.

Wie in Fig. 8b gezeigt kann es aber auch möglich, die Folie 42 von der Rückseite der Matrize so einzubringen, daß sie zwischen Druckübertragungsmedium und Matrize bzw. Formstoff liegt. Durch diese Anordnung kann die Dichtigkeit an den Linsenumrandungen für das Druckübertragungsmedium erhöht werden.

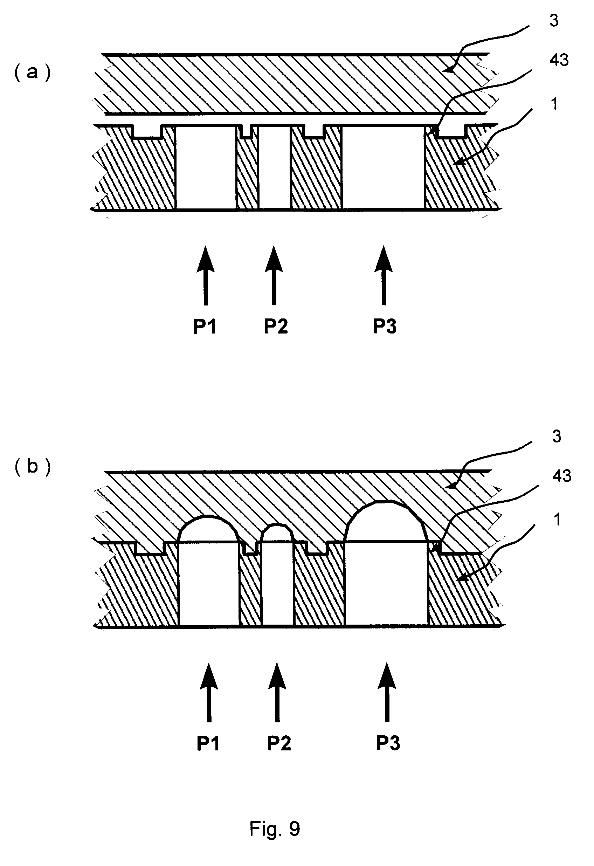

Fig. 9 zeigt schließlich eine vorteilhafte Ausgestaltung des Verfahrens zur Herstellung von Mikrolinsen unter Verwendung eines Druckübertragungsmediums, bei welchem Erhöhungen 43 auf der Matrizenoberseite zur Verbesserung der Dichtigkeit vorgesehen werden. Durch Beaufschlagung eines Druck auf den Formstoff 3 fließt der Formstoff in die zwischen den Erhöhungen 43 liegenden Vertiefungen und dichtet die Umrandungen der Linsen ab. Im Anschluß kann wie oben beschriebenen unter Zuhilfenahme des Druckübertragungsmedium ein konvexes Linsenarray geformt werden.

Außer den dargestellten Ausführungsbeispielen gibt es noch zahlreiche andere Anwendungen für Mikrolinsen oder Mikrolinsenarrays. Die mit dem erfindungsgemäßen Verfahren oder der erfindungsgemäßen Vorrichtung hergestellten Mikrolinsenarrays sind preiswert und in großer Stückzahl zu fertigen und können daher für eine Vielzahl von optischen Anwendungen eingesetzt werden.

## Patentansprüche

1. Vorrichtung zur Herstellung von Linsen, mit einer Matrize (1), die eine oder mehrere Öffnungen und/oder Ausnehmungen (2) für die zu formende Linse aufweist, wobei die relative Lage der Öffnungen oder Ausnehmungen (2) den zu formenden Linsen entsprechen, und mit einer Anpreßeinrichtung (4), mittels derer ein Formstoff (3) in einer Preßrichtung in die Öffnungen oder Ausnehmungen (2) der Matrize (1) einpreßbar ist, **dadurch gekennzeichnet, daß** die Matrize (1) die zu formende Mikrolinse nur in einem Randbereich im wesentlichen außerhalb der optischen Oberfläche berührt.

2. Vorrichtung zur Herstellung von Linsen, mit einer Matrize (1), die eine oder mehrere Öffnungen und/oder Ausnehmungen (2) für die zu formende Linse aufweist, wobei die relative Lage der Öffnungen oder Ausnehmungen (2) den zu formenden Linsen entsprechen, **dadurch gekennzeichnet, daß** eine Einrichtung vorgesehen ist, mittels derer ein Fluid unter Druck durch die Öffnungen oder Ausnehmungen (2) der Matrize (1) gegen einen Formstoff (3) preßbar ist.

3. Vorrichtung nach Anspruch 1, **dadurch gekennzeichnet, daß** die Öffnungen oder Ausnehmungen (2) in der Preßrichtung tiefer sind als die Dicke der zu formenden Linse.

4. Vorrichtung nach einem der vorhergehenden Ansprüche, **dadurch gekennzeichnet, daß** der Matrize (1) und/oder der Anpreßeinrichtung (4) eine Heizeinrichtung zugeordnet ist.

5. Vorrichtung nach einem der vorhergehenden Ansprüche, **dadurch gekennzeichnet, daß** die Matrize eine Vielzahl von Öffnungen oder Ausnehmungen aufweist, die in einem festgelegten Raster angeordnet sind.

6. Vorrichtung nach einem der vorhergehenden Ansprüche, **dadurch gekennzeichnet, daß** die Matrize (1) mittels eines mikrotechnischen Verfahrens, insbesondere mittels Röntgenlithographie oder UV-Lithographie und nachfolgender Galvanoformung erzeugt ist.

7. Vorrichtung nach einem der vorhergehenden Ansprüche, **dadurch gekennzeichnet, daß** die Matrize (1) mittels Senkerodieren, Bohren oder Fräsen hergestellt ist.

8. Vorrichtung nach einem der vorhergehenden Ansprüche, **dadurch gekennzeichnet, daß** die Öffnungen oder Ausnehnungen (2) im wesentlichen einen runden, elliptischen, grabenförmigen oder schlitzförmigen Querschnitt aufweisen.

9. Vorrichtung nach einem der vorhergehenden Ansprüche, **dadurch gekennzeichnet, daß** die Matrize (1) nach der Formung der Linse auf dem Formstoff (3) verbleibt, wobei vorzugsweise die Matrize (1) einen Hinterschnitt aufweist, der die geformte Linse nach deren Verfestigung formschlüssig hält.

10. Vorrichtung nach einem der vorhergehenden Ansprüche, **dadurch gekennzeichnet, daß** die Matrize (1) weitere Justagestrukturen (26) aufweist, die ein hochgenaues Ausrichten der Matrize (1) mit Linsen zu anderen optischen Komponenten erlauben.

11. Vorrichtung nach einem der vorhergehenden Ansprüche, **dadurch gekennzeichnet, daß** die Anpreßeinrichtung (4) ebenfalls als Matrize ausgebildet ist, so daß sowohl auf der der Matrize (1) zugewandten Seite des Formstoffs (3) als auch auf der der Anpreßeinrichtung (4) zugewandten Seite des Formstoffs (3) Linsenoberflächen ausgebildet werden.

12. Vorrichtung nach einem der vorhergehenden Ansprüche, **dadurch gekennzeichnet, daß** zwischen dem Formstoff (3) und der Matrize (1) ein Trennmittel (42), insbesondere eine Trennfolie vorgesehen ist.

13. Verfahren zur Herstellung von Linsen oder Linsenarrays mit folgenden Verfahrensschritten:
- Beaufschlagen einer im Bereich einer Oberfläche mit Öffnungen oder Ausnehmungen (2) versehenen Matrize (1) mit einem Formstoff (3);
- entweder Pressen eines Teils des Formstoffs (3) in die Öffnungen (2) der Matrize (1) derart, daß der Formstoff (3) den Grund der Öffnungen oder Ausnehmungen (2) im wesentlichen nicht berührt; oder
- Pressen eines Fluides durch die Öffnungen oder Ausnehmungen (2) der Matrize (1) gegen den Formstoff (3);
- Verfestigen des Formstoffs (3);

14. Verfahren nach Anspruch 13, **dadurch gekennzeichnet, daß** die Linsen nach Formung von der Matrize (1) getrennt werden.

15. Verfahren nach Anspruch 13, **dadurch gekennzeichnet, daß** die die Matrize (1) nach Formung der Linsen auf dem Formstoff (3) verbleibt.

16. Verfahren nach Anspruch 13, **dadurch gekennzeichnet, daß** die die Matrize (1) nach Formung der Linsen als Blende den die Mikrolinsen umgebenden Bereich optisch undurchlässig abdeckt.

17. Verfahren nach einem der vorhergehenden Ansprüche, **dadurch gekennzeichnet, daß** die Linsen in einem für Infrarot-Ultraviolett- oder sichtbare Strahlung durchlässigen Material geformt werden.

18. Verfahren nach einem der vorhergehenden Ansprüche, **dadurch gekennzeichnet, daß** für die Formung der Linsen ein hochviskoser Formstoff verwendet wird, der nach dem Formungsprozeß aushärtet.

19. Verfahren nach einem der vorhergehenden Ansprüche, **dadurch gekennzeichnet, daß** sich der Formstoff (3) während des Formungsprozeß im Bereich seiner Erweichungstemperatur befindet, und die Verfestigung dadurch erreicht wird, daß der Formstoff unter seine Erweichungstemperatur abgekühlt wird.

20. Verfahren nach einem der vorhergehenden Ansprüche, **dadurch gekennzeichnet, daß** sich der Formstoff (3) während des Formungsprozeß unterhalb seiner Erweichungstemperatur befindet, und die Verformung dadurch erreicht wird, daß der Formstoff unter erhöhtem Druck plastisch verformbar wird.

21. Verfahren nach einem der vorhergehenden Ansprüche, **dadurch gekennzeichnet, daß** die Verfestigung auf einer chemischen Reaktion, insbesondere Polymerisation oder Vernetzung von Polymerketten beruht und daß der Formstoff ein Glas, eine keramische Formmasse oder ein durch einen Sol-Gel-Prozeß hergestelltes Material ist.

22. Verfahren nach einem der vorhergehenden Ansprüche, **dadurch gekennzeichnet, daß** der Formstoff (3) ein thermoplastischer Kunststoff, ein Harz, eine keramische Formmasse oder ein durch einen Sol-Gel-Prozeß hergestelltes Material ist.

23. Verfahren nach einem der vorhergehenden Ansprüche, **dadurch gekennzeichnet, daß** die Mikrolinse oder das Mikrolinsenarray durch galvanische Abscheidung von Metall abgeformt wird.

24. Verfahren nach einem der vorhergehenden Ansprüche, **dadurch gekennzeichnet, daß** das abgeformte Metall als Form für die Herstellung von Linsen verwendbar gemacht wird.
